# EUROPEAN PATENT SPECIFICATION

(11) **EP 2 196 713 B1**
(45) Date of publication and mention of the grant of the patent: **13.06.2012**
(21) Application number: 09178912.3
(22) Date of filing: 11.12.2009
(51) Int. Cl.: F16L 13/14

(54) **Device, method and kit of parts for forming a press-fit connection with a tube**
Vorrichtung, Verfahren und Teilesatz zum Bilden einer Pressverbindung mit einem Rohr
Dispositif, procédé et kit de pièces pour former un raccord de sertissage avec un tuyau

(30) Priority: 12.12.2008 EP 08021611
(43) Date of publication of application: 16.06.2010
(73) Proprietor: Conex Universal Limited, Tipton West Midlands DY4 7JU (GB)
(72) Inventor: Glaze, Alan Richard, Bromsgrove, Worcestershire B60 IEP (GB); Webb, Steven Paul, Tipton, West Midlands DY4 7LX (GB)
(74) Representative: Weber-Bruls, Dorothée

(56) References cited:
- EP-A- 1 167 853
- EP-A- 1 431 643
- EP-A- 1 847 753
- DE-A1-102006 050 427

## Description

The invention relates to a device for forming a press-fit connection with a tube.

The invention also relates to a method of enabling an increase in compression of an annular sealing element in a press-fit connection, which annular sealing element is configured to be at least partially accommodated in a housing provided on an inside of a bead formed in a wall of a socket for receiving an end section of a tube.

The invention also relates to a kit of parts for forming a press-fit connection with a tube, including: a press-fit tool; and a device including a socket for insertion of an end section of the tube.

EP 1 431 643 A discloses a press connection arrangement comprising a tube that can be inserted into a pressable section of a fitting or armature. The fitting or armature consists of a cold-workable material. A bulge is formed in the pressable section, in which a sealing ring is accommodated. Adjacent the bulge is a cylindrical section adjoined by an outwardly expanding housing for a holding element. During the pressing action, a press tool annularly grips the pressable section and presses onto its outer surface, whereby the sealing ring is clamped tight to the outer surface of the tube to seal the connection. The housing is also pressed down, so that the holding element is pressed against the tube, and features on the holding element dig into the material of the tube.

A problem of the pressable section is that it requires a separate holding element to achieve alignment of the tube and that this element limits the movement of the cylindrical section towards the tube, and thereby the tightness of the seal, unless a large amount of force is applied.

EP 1 167 853 A2 discloses a pressure fitting for tubes. The fitting consists of a tubular body with a longitudinal axis and having, at least at one end, a peripheral bulging. Internally, this bulging defines a round recess, open towards the axis of the body and designed to house a round grommet. The bulging, and correspondingly the recess, which it defines, reveals, in cross-section, the shape of a practically rectangular trapezium, with a radial side that extends outwards from the tubular body almost perpendicularly to the longitudinal axis of the fitting, with a sloping free side at the free end of the fitting, which is angled so as to diverge with respect to the radial side as it goes towards the fitting axis, with a die or external shorter base which is slightly convex, essentially parallel to the axis of the body and joining together at the top the radial side and the sloping side, in order to define the opening of the recess towards the fitting axis. In one version, the sloping side of the bulging extends as a cylindrical portion, running parallel to the tube to be connected on the opposite side of the tubular body of the fitting itself. The radial wall, which is essentially perpendicular to the surface of the tube, constitutes a flat shoulder, without giving any scope to a space or cone with the tube itself.

DE 10 2006 050 427 A1 discloses a press fitting with a bead for receiving an O-ring on the inside. The bead corresponds to the O-ring in cross-section, with an essentially concentrically arranged crown section of the bead, viewed in axial direction of the fitting, transitioning on both sides into flanks, which continue into a cylindrical wall of the fitting. Press jaws of a press tool are provided with three different sections of press geometry, seen in axial direction, starting with a first press geometry formed by a bead press section formed as a cylindrical section. Pressure application on the bead from a radially outer direction by the cylindrical surface of the bead press section effects an axial widening of the bead, resulting from a flattening of the crown and the flanks. The axial widening of the bead occurs in only one direction, namely in the direction of the end of insertion of a tube. Fig. 16 is a detailed cross-sectional view of a section of a fitting in accordance with DE 10 2006 050 427 A1. Fig. 16 shows the fitting in the unpressed state. The magnitude of a first derivative of the outside radius of curvature of the fitting wall has a minimum at axial positions marked Z1 and Z3. The apex of the bead is at a position marked Z2. A problem of the known fitting and method of pressing it to an inserted tube is that the bead will generally deform in a manner that is not rotationally symmetric about the longitudinal axis of the fitting. Thus, at certain azimuthal positions, there may be locations where leaks can occur.

It is an object of the invention to provide a device and method of the types mentioned above that address the problems of the state of the art. In particular, the socket wall design should enable a relatively high degree of compression of the sealing element, resulting in good pressure-tightness, to be achieved, but the bead should retain its roundness and basic shape to a relatively large degree.

According to a first aspect, the invention provides a device for forming a press-fit connection as defined in claim 1.

In at least one of the second sections, the wall may have a thickness decreasing towards the adjacent bead.

Alternatively, in at least one of the second sections, the wall may have an outside radius varying essentially with the inside radius in axial direction.

In an embodiment, the device includes at least one annular sealing element having at least one recess along its circumference for providing a leakage path prior to pressing when a tube is inserted, in particular a recess situated adjacent at least one bulge. The minimum radius of each second section may correspond to a minimum radius of the socket, at least on the side of the adjacent bead on which the second section is provided.

In at least one of the second sections, the inside radius may increase continually with axial position towards the adjacent bead.

It is conceived that the, in particular each, second section terminates at a position of transition to an essentially cylindrical section of the wall.

In an embodiment, a difference between the minimum inside radius of the second section and the maximum inside radius of the wall is larger than the maximum value D.

In an embodiment, seen in longitudinal cross-section through a longitudinal axis of the socket, a tangent to an inside of the wall is at an angle of 20 ° or less at every axial position within each second section.

According to another aspect of the invention, there is provided a method of enabling an increased compression of an annular sealing element in a press-fit connection,
which annular sealing element is configured to be at least partially accommodated in a housing provided on an inside of a bead formed in a wall of a socket for receiving an end section of a tube, including
providing the wall with sections on either side of the bead that have an inside radius increasing towards the bead in axial direction for every azimuthal position, wherein a device according to the invention is provided.

In an embodiment, the sealing element is compressed using a tool including at least two co-operating jaws configured to envelop at least part of the first section when placed around the device, such that compression of the annular sealing element is due to a larger extent to downward movement of the bead than to deformation of the bead.

In a variant, the inside radius of the wall at each axial position corresponding to a transition between a bead and an adjacent second section is set such that a difference between this radius and a minimum inside radius of at least the first section of the socket is at most equal to a difference between a maximum outside radius of the bead when the jaws first contact the bead and a maximum outside radius of the bead when the jaws are finally closed upon pressing.

An embodiment of the method includes providing the annular sealing element and the tube, wherein the annular sealing element has an inside diameter larger than the outside diameter of the end section of the tube.

The method may include providing the annular sealing element and the tube, wherein the annular sealing element is dimensioned such that, with the end section of the tube inserted through the annular sealing element and into the socket, a clearance for forming a leakage path is provided between the annular sealing element and the housing provided on the inside of a bead.

According to another aspect, the kit of parts for forming a press-fit connection with a tube according to the invention includes:
a press-fit tool; and
a device including a socket for insertion of an end section of the tube according to the invention.

In an embodiment, the tool includes at least two co-operating jaws configured to envelop at least part of the first section when placed around the device, and an inside radius of the wall at each axial position corresponding to a transition between a bead and an adjacent second section is set such that a difference between this radius and a minimum inside radius of at least the first section of the socket is at most equal to a difference between a maximum outside radius of the bead when the jaws first contact the bead and a maximum outside radius of the bead when the jaws are finally closed upon pressing.

In an embodiment, the tool includes at least two co-operating jaws configured to envelop at least part of both second sections when placed around the device.

The jaws may define an opening with an inside diameter when closed, wherein a wall thickness of the second sections is such that an inside of the second sections is generally cylindrical in shape when the second sections are pressed to such an extent that their outside radii at at least the respective points of commencement correspond to an inside diameter defined by the jaws.

The jaws may be configured to envelop both second sections and at least parts of respective adjacent sections of the wall, wherein the jaws are provided with an inside profile imparting a non-circular cross-sectional shape to the adjacent sections of the wall, when the jaws are closed.

The tool may include at least two co-operating jaws configured to exert a pressing force on the bead, in particular contacting only the bead on first application to the wall, upon application to the wall.

The invention is based on the surprising insight that, because the minimum radius of each second section is smaller than the inside radius at the axial position where the second section commences, at least the base of the bead is raised a relatively large distance away from the outside surface of the tube in the pre-pressed condition. Compression is due to a larger extent to downward movement of the bead, as opposed to deformation of the bead. The lower deformation means that lower forces are required to achieve compression of the annular sealing element. It also means that the base of the bead does not necessarily dig. into the tube when the sealing element is compressed. This is the case at each azimuthal position (i.e. the inside profile is of a generally similar configuration, though not necessarily of the exact same dimensions, for every longitudinal cross-section through the centre axis of the socket). Therefore, deformations of the tube that could make it unround can be largely avoided, at least where the first section of the wall of the socket and particularly the bead is concerned, even where a press tool with two jaws is used. This is even the case where a pressing tool is used that imparts a non-circular cross-sectional, e.g. hexagonal, shape to sections of the socket wall adjacent the first section. The second sections prevent progression of the deformation to the bead. Because there are two second sections each located immediately adjacent a bead, compression of the sealing element is symmetrical, and full downward movement of the base of the bead is assured. This improves the pressure-tightness. The sealing element remains essentially centralised in the housing provided by the bead. In contrast to a chamfered inside edge of the base of the bead, each second section commences at a position along an axis of the socket at which a magnitude of a derivative of an outside radius, especially of the curvature, of the wall with respect to axial position has a local minimum. It is thus adjacent and not below the base of the bead or bases of the beads, and therefore makes downward movement of the bead without deformation of the (side) walls of the bead possible. This is achieved without affecting the shape of the bead, in particular without an increase in its inside opening angle. Thus, the suitability of the housing for preventing the sealing element from being dislodged when the tube is inserted is unaffected. Moreover, for a given desired final degree of compression, the higher compression achieved with the pressing action means that a smaller amount of pre-compression due to insertion of the tube is required. This reduces the risk of damage to the sealing element or dislodgment of the sealing element by the face of the tube as it is inserted into the socket. The minimum inside radii at the terminations of the second sections contribute to alignment of the tube, at least during the pressing action.

A variant of the device in which, in at least one of the second sections, the wall has a thickness decreasing towards the adjacent bead, provides a configuration that can be manufactured efficiently using a machining operation. Starting with cylindrical precursors to the second sections, a machining operation need only be carried out on the inside.

An alternative embodiment, wherein, in at least one of the second sections, the wall has an outside radius varying essentially with the inside radius in axial direction, is suitable for a larger range of manufacturing processes, including forming. If the second sections are formed, then machining is not required. If forming is used, then the manufacturing process is made easier with this profile, because the bead wall can transition more gradually into the second sections than would be the case if the bead were situated immediately adjacent cylindrical sections. It is noted that the outside radius varies essentially with the inside radius in axial direction in the sense that, as the inside radius increases in axial direction, so does the outside radius, so that they vary in parallel, preferably to the same absolute extent.

If the device includes at least one annular sealing element having at least one recess along its circumference for providing a leakage path prior to pressing when a tube is inserted, in particular a recess situated adjacent at least one bulge, the additional compression achievable by increasing the height of the housing provided by the bead in the pre-pressed state is put to very good use. In particular, the annular sealing element can be dimensioned with respect to the tube that the socket is designed to accommodate such that the amount of pre-compression on insertion of the tube is relatively low. This means that it is practically impossible for the recess providing the leakage path to be closed merely due to insertion of the tube. The additional compression provided by the raised bead ensures that the total amount of compression in the final, pressed state is still sufficient to close the leakage path and provide a tight seal.

If the minimum radius of each second section corresponds to a minimum radius of the socket, at least on the side of the adjacent bead on which the second section is provided, then better alignment of the tube is achieved. A tube with the appropriate outside diameter is guided by the wall at the position of the terminations of the second sections. These positions provide fulcrum points for the second sections during the pressing operation, such that the insides of the second sections are brought up against the inserted tube by the pressing operation. An effect of this is to provide for controlled deformation of the socket.

In an embodiment, in at least one of the second sections, the inside radius increases continually with axial position towards the adjacent bead. Compared with a stepped shape, little axial displacement of material occurs during the pressing operation, when the insides of the second sections are pressed against the tube. This means that less force is required. A further effect is that deformation of the tube at a position corresponding to the "base" of a step in the wall of the socket due to the pressing force is avoided. The continual increase is in one embodiment at an essentially constant rate with respect to axial position. It could also be at an increasing rate (i.e. the insides of the second sections curve upwards towards the base of the bead), to raise the bead even further. In both cases, the inside of the wall in the second sections "unrolls" against the inserted tube when the press force is applied. There is therefore a low risk of damage to the tube, in particular a low risk of pinching the tube.

Where the, in particular each, second section terminates at a position of transition to an essentially cylindrical section of the wall, the problem of deformation of the tube, which results in an unround shape if a pliers-like press-fit tool is used, is alleviated further. The point of minimum inside radius of the second section is at the termination thereof, away from the bead. This points acts as a fulcrum when the second section is caused to collapse towards the inserted tube. The cylindrical sections spread the force applied at the fulcrum point. They also improve the alignment of the tube with respect to the central axis of the socket.

Since the at least one bead at least partially accommodates an annular sealing element with.a cross-section diameter with a maximum value D, and a depth of the bead, corresponding to a difference between an inside radius of the wall at an axial position where the second section commences and a maximum inside radius of the wall, is at least equal to half the maximum value D, an inserted sealing element is held more firmly in place prior to insertion of the tube. In particular since a difference between the minimum inside radius of the second section and the maximum inside radius of the wall is larger than the maximum value D, there is essentially no risk that the annular sealing element might become dislodged on insertion of the tube. This is also true for non-circular cross-sectional shapes of the annular sealing element, provided the difference between an inside radius and an outside radius of the annular sealing element is smaller than or equal to the maximum diameter D. It is noted that, although the term annular sealing element is used herein, such sealing elements are generally toroids: shapes obtainable by revolving a surface around an adjacent axis. The term cross-section diameter is used herein to denote the diameter of the revolved surface.

If, seen in longitudinal cross-section through a longitudinal axis of the socket, a tangent to an inside of the wall is at an angle of 20° or less at every axial position within each second section, then the risk of damage to the inserted tube during pressing is further reduced. A pressing force exerted on the bead will tend to move the second section up against the tube, rather than being transferred along the wall in the second section. Thus, there is less deformation of the tube due to the end of the second and first section being pressed into the tube. There is also less deformation of the bead.

The method of enabling an increased compression of an annular sealing element in a press-fit connection according to the invention allows one to provide a tighter seal or to provide a seal that is tight enough, but requires less pre-compression due to insertion of the tube.

If compression of the annular sealing element is due to a larger extent to downward movement of the bead than to deformation of the bead, then the risk of leaks at certain azimuthal positions is reduced. A substantially rotationally symmetric compression with respect to a longitudinal axis of the socket is obtained.

In a practical implementation, in which the compression of the annular sealing element can be essentially exclusively due to movement of the bead towards the pipe, the base of the bead is at such a radial distance to the inserted pipe, that when the jaws have closed completely, the base just touches the pipe. Thus the base of the bead, which is not deformed to any appreciable extent, impresses its round shape on the inserted tube. This is achieved due to the fact that, in this embodiment, an inside radius of the wall at each axial position corresponding to a transition between a bead and an adjacent second section is set such that a difference between this radius and a minimum inside radius of at least the first section of the socket is at most equal to, generally slightly less than, a difference between a maximum outside radius of the bead when the jaws first contact the bead and a maximum outside radius of the bead when the jaws are finally closed upon pressing. The minimum inside radius of at least the first section of the socket will generally correspond to the outside radius of the tube for which the fitting is provided. This is in any case true for the minimum inside radius of the overall socket, the socket being that part of the device up to a stop, e.g. a shoulder, for preventing further insertion of a tube.

Where the method involves providing the annular sealing element and the tube, and the annular sealing element has an inside diameter larger than the outside diameter of the end section of the tube, no pre-compression is provided at all. Instead a pre-press leakage indicator is provided, since fluid can pass between the inserted tube and the annular sealing element. Nevertheless, due to the increased compression obtainable by the pressing operation, the seal in the pressed condition is still very good.

A similar leakage indicator is provided if the annular sealing element is dimensioned such that, with the end section of the tube inserted through the annular sealing element and into the socket, a clearance for forming a leakage path is provided between the annular sealing element and the housing provided on the inside of a bead. In this case, the leakage path is between the outside of the annular sealing element and the inside of the housing provided for it by the bead, instead of, or in addition to, the leakage path between tube and annular sealing element.

It is envisaged that the device be used in conjunction with a press-fit tool. The tool can include a pair of jaws configured to envelop at least part of both second sections when placed around the device. In fact, the tool may envelop only the first section or part of the first section, so that it is ensured that the space between the tube and the second sections collapses when the jaws are closed. Alternatively, the tool may have jaws with an inside profile adapted to the socket wall and comprising sections corresponding to the first section and adjacent sections. At least the profile section corresponding to the first section is designed to effect a reduction in diameter of the first section of the socket wall that is distributed generally evenly along the circumference. There is thus less pinching of the bead.

In a variant, the pair of jaws defines an opening with an inside diameter when closed, wherein a wall thickness of the second sections is such that an inside of the second sections is generally cylindrical in shape when the second sections are pressed to such an extent that their outside radii at at least the respective points of commencement correspond to the inside diameter of the jaws. Thus, the insides of the second sections of the wall of the socket provide a holding force on the tube. The use of grip rings or retaining elements is not required.

When the jaws are configured to envelop both second sections and at least parts of respective adjacent sections of the wall, and the jaws are provided with an inside profile imparting a non-circular cross-sectional shape to the adjacent sections of the wall, when the jaws are closed, the retention of the tube in the socket is brought about by the sections deformed to a non-circularly cylindrical shape. The jaws preferably impart a generally circular cross-sectional shape to the first section of the socket wall, i.e. the bead and adjacent second sections. The second sections can act as a barrier to prevent the bead from being deformed in the same manner as the sections that are deformed to a non-circular cross-sectional shape.

The invention will now be explained in further detail with reference to the accompanying drawings, in which:
- Fig. 1: is a perspective view of a section of a coupler comprising a first embodiment of a device for forming a press-fit connection;
- Fig. 2: is an end view along a central axis of the device of Fig. 1;
- Fig. 3: shows a longitudinal cross-section of the device of Figs 1 and 2;
- Fig. 4: is a perspective view of a section of a coupler comprising a second embodiment of a device for forming a press-fit connection;
- Fig. 5: is an end view along a central axis of the device of Fig. 4;
- Fig. 6: shows a longitudinal cross-section of the device of Figs 4 and 5;
- Fig. 7: is a perspective view of a section of a coupler comprising a third embodiment of a device for forming a press-fit connection;
- Fig. 8: is an end view along a central axis of the device of Fig. 7;
- Fig. 9: shows a longitudinal cross-section of the device of Figs 7 and 8;
- Fig. 10: is a plan view of an O-ring for use in any of the devices of Figs. 1-9;
- Fig. 11: shows a cross-section along A-A of the O-ring of Fig. 10;
- Fig. 12: shows a cross-section along B-B of the O-ring of Figs. 10 and 11;
- Fig. 13: shows a cross-section along C-C of the O-ring of Figs. 10-12;
- Fig. 14: is a cross-sectional view of the device of Figs. 7-9, with the O-ring and a tube inserted, prior to forming a press-fit connection;
- Fig. 15: is an enlarged cross-sectional view of a part of the assembly of Fig. 14, showing the O-ring in a housing provided by a bead; and

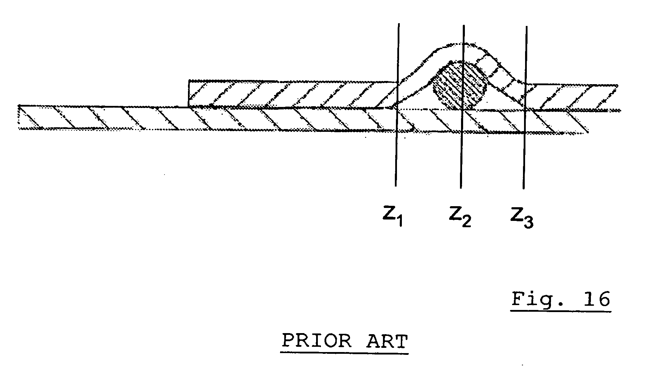

- Fig. 16: is an enlarged cross-sectional view of a press fitting according to the state of the art.

Three embodiments of a device for forming a press-fit connection with a tube are described in the following. Each device is an integral part of a fitting, such as a coupler, connector, reducer, elbow, bend, tee, stop end or flange.

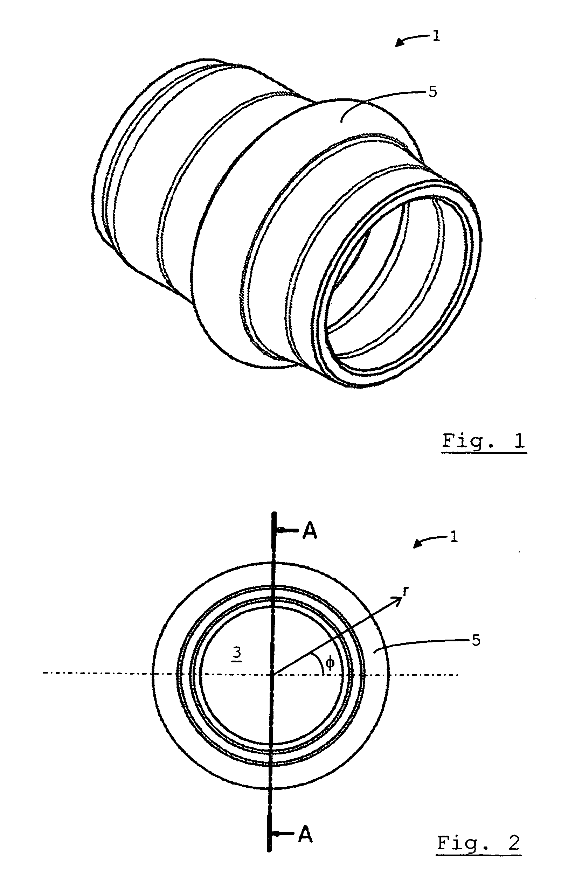

A first device 1 is shown in Figs. 1-3, and comprises a socket for insertion of an end section of a tube (not shown). The socket is defined by a wall 2, and extends from an insertion opening 3 to a shoulder 4. The socket is thus that section that accommodates an inserted end section of a tube with a diameter for which the device is intended. The end face of such a tube abuts against the shoulder 4, when fully inserted.

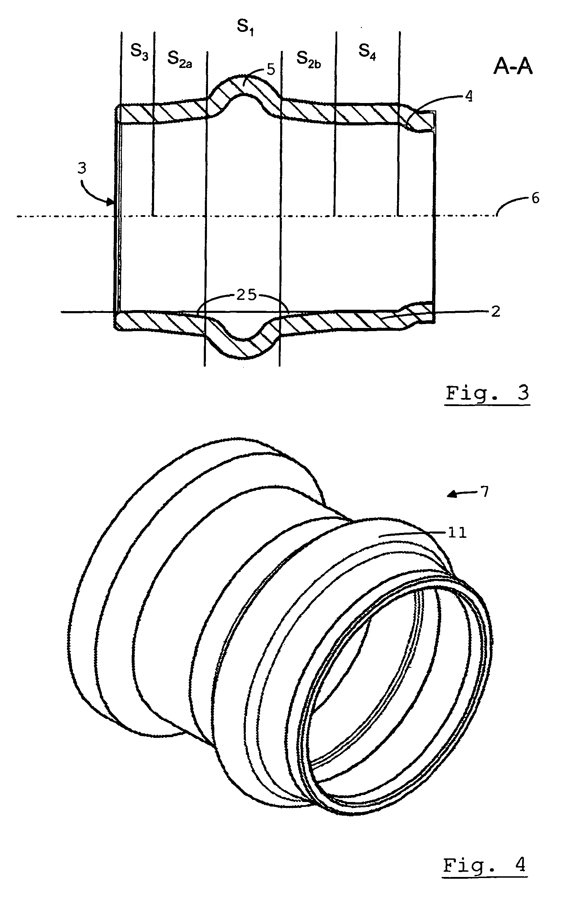

Fig.3 shows a longitudinal cross-section along the line A-A in Fig. 2. Viewed in axial direction, i.e. generally parallel to the direction of insertion of the tube, the wall 2 defining the socket includes a first longitudinal section S₁, which includes a bead 5 and second sections S₂ₐ,S_{2b} on either side of the bead. First and second cylindrical sections S₃, S₄ are provided adjacent the second sections S₂ₐ,S_{2b}. The inside of the bead 5 provides a housing for at least partially accommodating an annular sealing element (not shown in Figs. 1-3).

It is useful to define a cylindrical co-ordinate system as indicated in Fig. 2, such that a point is defined by its azimuthal position (φ), radial position r, and a position along a central axis 6 of the socket. A longitudinal cross-section at every azimuthal position (φ) has a shape as illustrated in Fig. 3. In variants, the dimensions may vary, however. In other words, such variants of the first device 1 are not precisely rotationally symmetric. However, the illustrated first device 1 is rotationally symmetric. This provides an even distribution of compression forces when the press-fit connection is established.

The inside of each second section S₂ₐ, S_{2b} curves upwards towards the adjacent bead 5 from an axial position at which the inside radius has a minimum. This position is where the second section concerned transitions into the adjoining cylindrical section S₃,S₄. The minimum inside radius of the second sections S₂ₐ,S_{2b} is essentially equal to the minimum radius of the entire socket, and slightly larger than the outer radius of the tube intended to be inserted. In the illustrated embodiment, the inside radius increases essentially linearly with axial position towards the bead in each second section S₂ₐ,S_{2b}. The maximum inside radius is at the axial position where the second section S₂ₐ, S_{2b} commences, i.e. joins the bead 5. As a consequence, the height of the base of the bead above an inserted tube is relatively large, given the radius of curvature of the bead 5. In the first device 1, the maximum height of the housing provided by the bead 5 above an inserted tube is also relatively high. In effect, the entire bead 5 is "lifted up".

The profile of the socket of the first device 1 is obtainable by forming, e.g. using rolls, hydroforming or a combination of at least one die and an expandable insert. The first device 1 can also be cast. The material of the wall can be stainless steel, carbon steel, copper or a copper alloy.

Being formed, the thickness of the wall 2 in the second sections S₂ₐ,S_{2b} is essentially constant. The shape of Fig. 3 is relatively easy to manufacture, because, adjacent the axial position where the magnitude of the derivative of the outside radius of curvature of the wall 2 with respect to axial position has a local minimum, in other words, where a second section S₂ₐ,S_{2b} transitions into the side walls of the bead 5, the bead 5 has a relatively large radius of curvature. There is no sharp fold where the bead 5 joins the second sections S₂ₐ,S_{2b.}

A second device 7 is shown in Figs. 4-5. It also comprises a socket for insertion of an end section of a tube (not shown). The socket is defined by a wall 8, and extends from an insertion opening 9 to a shoulder 10. The end face of a tube for which the second device 7 is designed abuts against the shoulder 10, when fully inserted.

Fig.4 shows that the wall 8 defining the socket includes a first longitudinal section S'₁, which includes a bead 11 and second sections S'₂ₐ,S'_{2b} on either side of the bead 11. First and second cylindrical sections S'₃, S'ₐ are provided adjacent the second sections S'₂ₐ,S'_{2b} on either side of the first section S'₁. The inside of the bead 11 provides a housing for at least partially accommodating an annular sealing element (not shown in Figs. 4-7).

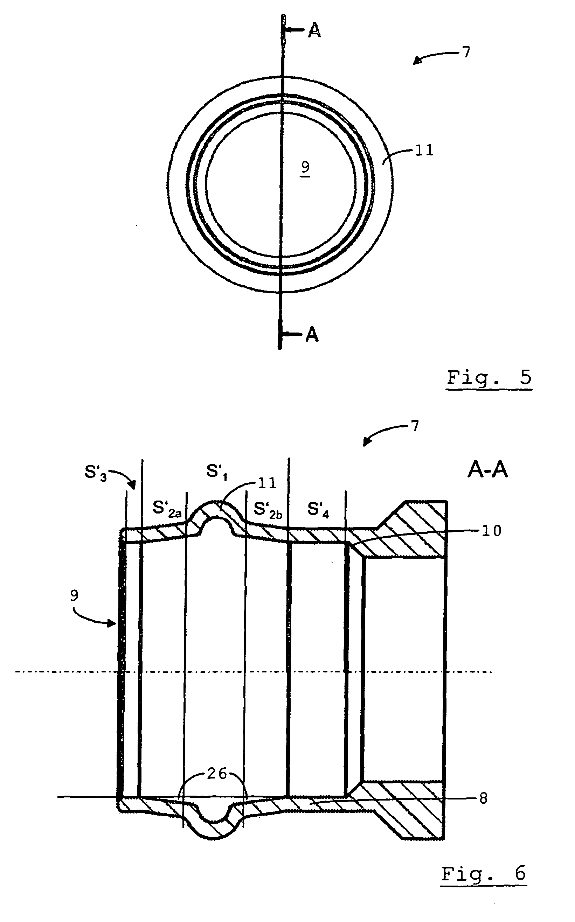

A longitudinal cross-section at every azimuthal position (φ) has a shape as illustrated in Fig. 5. The illustrated second device 7 happens to be essentially rotationally symmetric.

The inside radius of each second section S'_{2a,} S'_{2b} increases linearly with axial position towards the adjacent bead 11 from an axial position at which the inside radius has a minimum. This position is where the second section concerned transitions into the adjoining cylindrical section S'₃,S'₄. The maximum inside radius is at the axial position where the second section S'₂ₐ, S'_{2b} commences, i.e. joins the bead 11. The minimum inside radius of the second sections S'₂ₐ,S'_{2b} is also essentially equal to the minimum radius of the entire socket, and slightly larger than the outer radius of the tube intended to be inserted. Thus, the cylindrical sections S'₃,S'₄ align the tube, when inserted.

In the second device 7 also, the height of the base of the bead 11 above an inserted tube is relatively large, given the radius of curvature of the bead 11. The second sections S'₂ₐ, S'_{2b} "lift up" the base of the bead. In the second device 1, the maximum height of the housing provided by the bead 11 above an inserted tube is also relatively high.

The profile of the socket of the second device 7 is obtainable by machining, generally after forming, e.g. using rolls, hydroforming or a combination of at least one die and one or more expandable inserts. The second device 7 can also be cast and then machined. The material of the wall 8 can be stainless steel, carbon steel, copper or a copper alloy.

Because the inside and outside radius of the second sections S'₂ₐ,S'_{2b} both increase continually towards the bead, and at the same rate, the wall thickness is generally constant. Thus, the shape of the second sections S'₂ₐ,S'_{2b} is essentially frusto-conical.

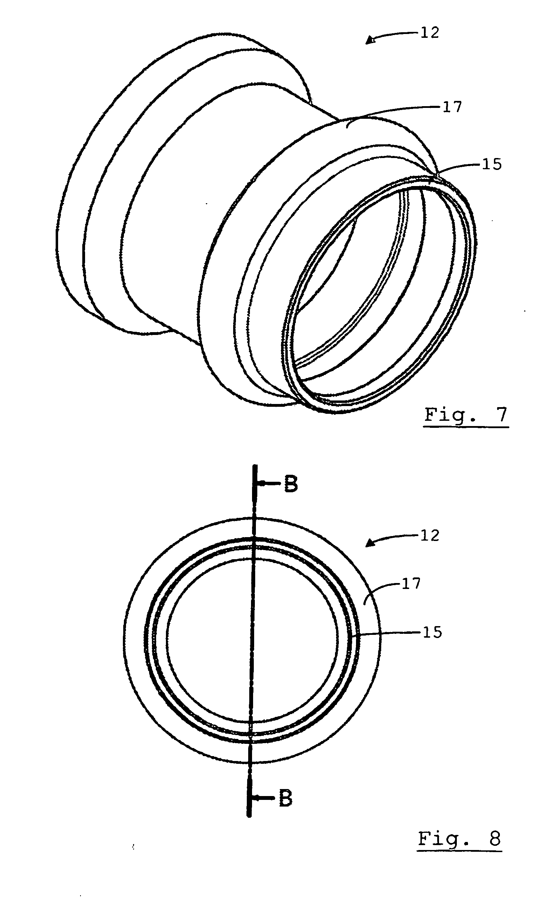

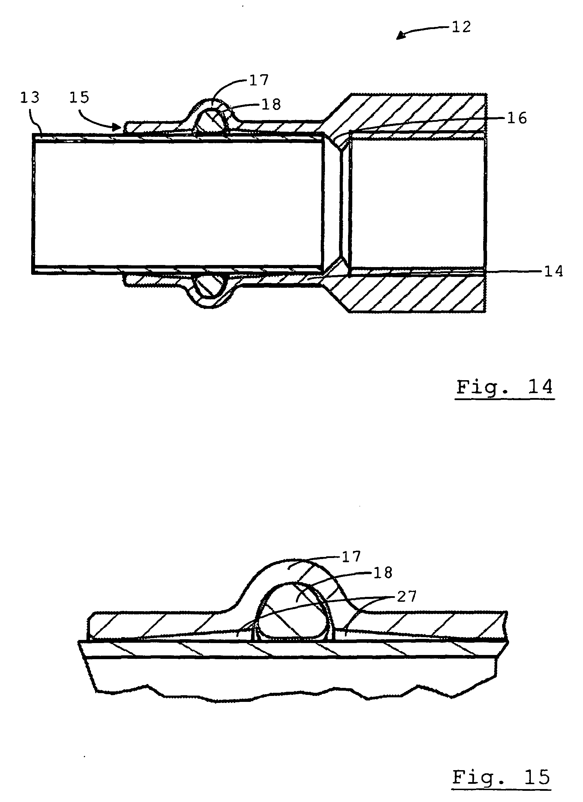

A third device 12 is illustrated in Figs. 7-9, and also in Figs. 14 and 15. It again comprises a socket for insertion of an end section of a tube 13. The socket is defined by a wall 14, and extends from an insertion opening in an end face 1 of the device 12 to a shoulder 16. The tube 13 abuts against the shoulder 16, when fully inserted, as shown in Fig. 14.

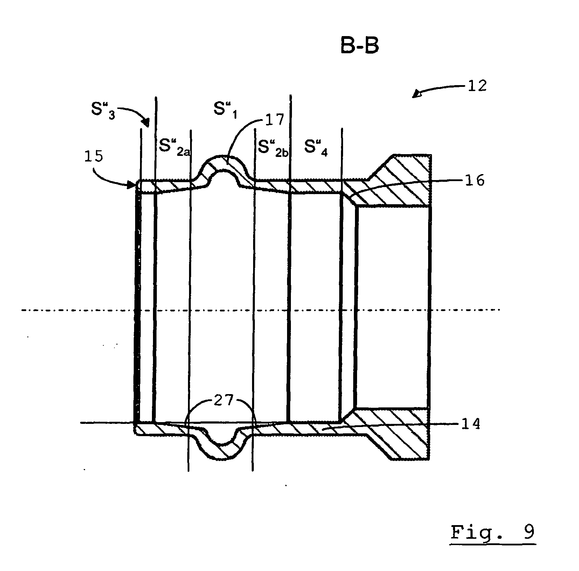

As illustrated in Fig. 9, one can again notionally divide the wall 14 into axial sections. A first section S"₁ includes a bead 17 and second sections S"₂ₐ,S"_{2b} on either side of the bead 17. First and second cylindrical sections S"₃, S"₄ are provided adjacent the second sections S"₂ₐ,S"_{2b} on either side of the first section S"₁. The inside of the bead 17 provides a housing for at least partially accommodating an annular sealing element.

A longitudinal cross-section at every azimuthal position φ has a shape as illustrated in Fig. 9. The illustrated third device 12 is also essentially rotationally symmetric.

The inside radius of each second section S"₂ₐ, S"_{2b} increases continuously, in fact essentially linearly, with axial position towards the adjacent bead 17 from an axial position at which the inside radius has a minimum. This position is where the second section concerned transitions into the adjoining cylindrical section S"₃,S"₄. The minimum inside radius of the second sections S"₂ₐ,S"_{2b} is also essentially equal to the minimum radius of the entire socket, and slightly larger than the outer radius of the tube 13, which is thus aligned by them prior to pressing.

In the third device 12, the base of the bead 17 is also "lifted up" due to the profile of the adjacent second sections S"₂ₐ,S"_{2b}, but the maximum height of the housing for the sealing element is not particularly large, given the diameter of the bead 17.

The profile of the socket of the third device 12 is obtainable by machining only the inside of the wall 14 in the region of the bead 17 and second sections S"₂ₐ,S"_{2b}. The material of the wall 14 can be stainless steel, carbon steel, copper or a copper alloy.

In contrast to the first and second devices 1,7, the wall thickness is not constant in the second sections S"₂ₐ,S"_{2b}, but the wall 14 tapers towards the bead 17. The taper is provided only on the inside. On the outside, the second sections S"₂ₐ,S"_{2b} form continuations of the adjacent cylindrical sectionsS"₃, S"₄.

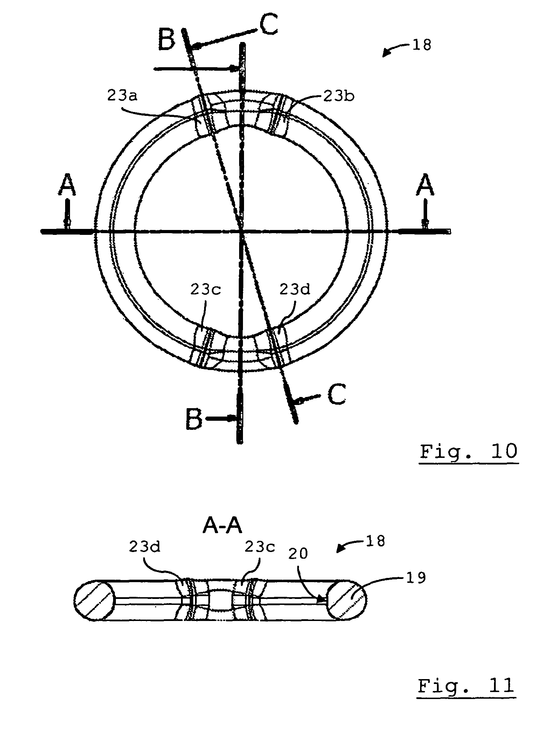

A sealing ring 18 for use as a sealing element in any of the devices 1,7,12 is illustrated separately in Figs. 10-13. This sealing ring 18 includes pre-press leak indication features, which exploit the relatively large compression available with the socket design presented herein.

The sealing ring 18 has a first cross-sectional shape 19, illustrated in Fig. 11 along a majority of its circumference. This first shape 19 has a flattened part 20 defining an inner circumference of the sealing ring 18. In an alternative embodiment (not shown), the first shape 19 is completely rounded, so that the flattened part 20 is absent. The contour of the first shape 19 is otherwise rounded, although not everywhere with the same radius of curvature.

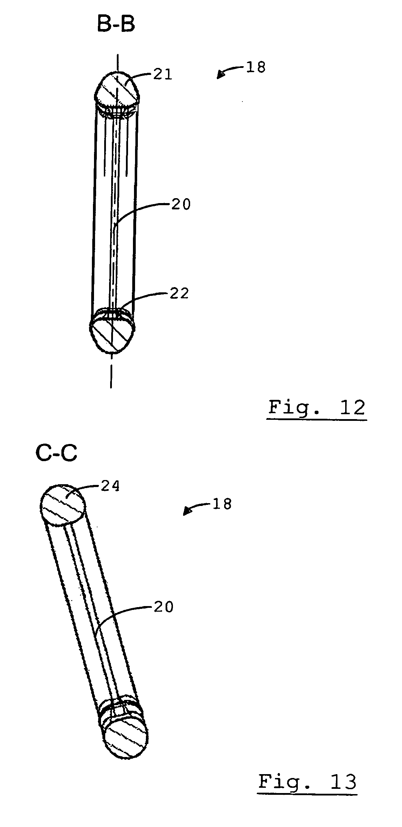

The sealing ring 18 has a maximum inside diameter at a circumferential position corresponding to the view provided in Fig. 12. There, it has a second cross-sectional shape 21 with an area that is a minimum for all circumferential positions. Again, the second shape 21 has a flattened part 22 defining an inner circumference of the sealing ring 18. The contour of the second shape 21 is otherwise rounded, although not everywhere with the same radius of curvature. In fact, if one defines the height h₁ of the second shape 21 as half the difference between the outside diameter and the inside diameter of the sealing ring 18 at this circumferential position, then the radius of curvature decreases to a value substantially lower than half the height on either side of the central part 22 of the inside of the sealing ring 18. The radius of curvature is also slightly smaller than half the height at the apex of the second shape 21, which forms the outside of the sealing ring 18. As is clear from Fig. 15, this helps centre the sealing ring 18 in the housing provided by the bead 17.

On either side in circumferential direction of the portion with the maximum inside diameter, there are projections 23a-d. These have a third cross-sectional shape 24 as shown in Fig. 13 where their cross-sectional area is at a maximum. The characteristics of the second shape 21 set out above also describe the third shape 24.

As is seen clearly in Figs. 10 and 12, the projections 23a-d and the portion with the second cross-sectional shape 21 define a gap on the inside of the sealing ring 18. The additional volume provided by the projections compared to a continuation of the first cross-sectional shape 19 along that portion of the circumference is slightly less than the volume missing from the portion with the second cross-sectional shape 21 compared to a continuation of the first cross-sectional shape 19 along that portion of the circumference. When the sealing ring 18 is compressed due to the reduction in height of the housing provided by the bead 17, the material of the projections 23a-d is displaced to fill the gaps between them. In the pre-press condition with the tube 13 inserted through the sealing ring 18 the amount of pre-compression of the sealing ring 18 is insufficient to close the gaps between the projections 23a-d.

With reference to Fig. 15 and the lower halves of the cross-sections of Figs. 3, 6 and 9, it can be seen that the second sections S₂ₐ,S_{2b},S'₂ₐ,S'_{2b},S"₂ₐ,S"_{2b} define annular spaces 25,26,27, respectively, that collapse when a pressing force is applied to at least the bead 5,11,17. Thus, the height of the bead 5,11,17 is reduced, due to the fact that the bead 5,11,17 moves towards the tube 13, rather than because the bead 5,11,17 deforms.

Although a press collar can be used as a press tool, it is envisaged that a pliers-like tool (not shown) or a power tool with a pair of jaws will be used. The jaws are configured to envelop at least part of both second sections 8₂ₐ, S_{2b},S'₂ₐ,S'₂ₐ,S"₂ₐ,S"_{2b} when placed around the device 1,7,12. The jaws can be variously profiled. A suitable profile is that of the KSP 24 inserts for press tools available from Gustav Klauke GmbH, but a variety of equally suitable alternative tools and tool inserts are available from various other providers. Such tools or tool inserts provide jaws configured to envelop both second sections S₂ₐ, S_{2b},S'₂ₐ,S'₂ₐ;S"₂ₐ,S"_{2b} and at least parts of the first and second cylindrical sections S₃,S₄;S'₃,S'₄;S"₃,S"₄ of the wall 2;8;14. They are provided with an inside profile imparting a non-circular cross-sectional shape to the first and second cylindrical sections S₃,S₄;S'₃,S'₄;S"₃,S"₄ when the jaws are closed. The bead 5,11,17 and second sections S₂ₐ, S_{2b};S'₂ₐ,S'₂ₐ,S"₂ₐ,S"_{2b} are merely reduced in diameter, but retain their essentially circular cross-sectional shape.

The jaws of the press tool define an opening with an inside diameter, when closed such that the jaws cannot be moved closer together. The wall thickness of the second sections S₂ₐ, S_{2b},S'₂ₐ,S'₂ₐ,S"₂ₐ,S"_{2b} is such that an inside of the second sections S₂ₐ, S_{2b},S'₂ₐ,S'₂ₐ;S"₂ₐ,S"_{2b} is generally cylindrical in shape when the second sections S₂ₐ, S_{2b},S'₂ₐ,S'₂ₐ,S"₂ₐ,S"_{2b} are pressed to such an extent that their outside radii at at least the respective points of commencement correspond to the inside diameter of the jaws. In this position, the base of the bead 5,11,17 is positioned against the tube 13.

In an alternative embodiment, the press tool includes at least two co-operating jaws configured to exert a pressing force on the bead, in particular on only the bead, at least upon application to the wall. This ensures that the bead 5,11,17 is moved towards the inserted tube 13 when the jaws are closed. The jaws are configured to exert a force on the bead 5,11,17 that is generally symmetrical with respect to a plane through an apex of the bead 5,11,17 and perpendicular to a longitudinal axis of the device 1,7,12.

It may be the case that the jaws impart a hexagonal cross-sectional shape to certain sections of the device 1,7,12, in particular the second sections S₂ₐ, S_{2b},S'₂ₐ,S'₂ₐ,S"₂ₐ,S"_{2b} and/or at least parts of the first and second cylindrical sections S₃,S₄;S'₃,S'₄;S"₃,S"₄. Because deformation of the bead 5,11,17 is essentially prevented, this hexagonal cross-section will not extend to the bead 5,11,17, reducing the risk of leakage.

The inside diameter of the jaws at the axial position corresponding to the bead 5,11,17 is such that, when the jaws are completely closed, the outside radius of the bead 5,11,17 is reduced by an amount substantially equal to, or slightly larger than, the radial distance between the base of the bead 5,11,17 and an inserted tube 13. If the amount is generally equal, there is little or no deformation of the bead 5,11,17. It retains its essentially round shape, helping to prevent leakage. If the reduction is slightly larger than the radial distance between the base of the bead 5,11,17 and an inserted tube 13, then the bead 5,11,17 is still not appreciably deformed, but it impresses its round shape on the tube 13. This similarly helps prevent leakage.

It is observed that the sealing ring 18 described and illustrated in detail herein is not the only type of sealing element that can be employed to advantage in the devices 1,7,12 discussed herein. In particular, the sealing ring described in detail in EP 1 847 753 A1 also has at least one recess along its circumference for providing a leakage path prior to pressing when a tube is inserted. This sealing ring can be used as an alternative to the sealing ring 18 described here.

Alternatively, an O-ring with a substantially circular or D-shaped cross-section along its entire circumference can be used, when appropriately dimensioned. In one alternative, the O-ring or D-ring has an inside diameter larger than the outside diameter of the end section of the tube 13. In that case, a leakage path is provided between the tube 13 and the annular sealing path when the tube 13 is inserted, and the annular sealing element is not precompressed at all. This minimises the risk of damage to the annular sealing element caused by sharp edges of the end face of the tube 13 as it is inserted through the annular sealing ring. It also decreases the risk that the annular sealing ring is dislodged by the insertion action.

An alternative leakage path can be provided between the annular sealing element and the bead 5,11,17, if the annular sealing element is provided with a small enough outside diameter and cross-sectional diameter. The leakage path is closed by the downward movement of the bead 5,11,17. The same effect is provided where the leakage path is between the inside of the annular sealing element and the tube 13, e.g. where the inside diameter of the annular sealing element is larger than the outside diameter of the tube 13.

The features disclosed in the foregoing description or the following claims or accompanying drawings, expressed in their specific forms or in terms of means for performing the disclosed function or a method or process for attaining the disclosed result, as the case may be, may be applied separately or in any combination for the purpose of realising the invention in its diverse forms.

For example, the second sections S₂ₐ, S_{2b},S'₂ₐ,S'₂ₐ,S"₂ₐ,S"_{2b} may be provided on either side in axial direction of a section comprising two or more beads, each providing a housing for an annular sealing element, such that their height is collectively raised by the second sections S₂a,S₂b,S'₂a,S'₂a,S"₂a,S"_{2b}. Alternatively, the first sections S₁,S'₁,S"₁ described above may be repeated one or more times in axial direction along the socket.

### LIST OF REFERENCE NUMERALS

- 2: 1 1^{st} Device Wall
- 3: Opening
- 4: Shoulder
- 5: Bead
- 6: Central axis
- 7: 2^{nd} Device
- 8: Wall
- 9: Opening
- 10: Shoulder
- 11: Bead
- 12: 3r^{d} Device
- 13: Tube
- 14: Wall
- 15: End face
- 16: Shoulder
- 17: Bead
- 18: Sealing ring
- 19: 1^{st} Cross-sectional shape
- 20: Flattened part
- 21: 2^{nd} Cross-sectional shape
- 22: Flattened part
- 23a-d: Projections
- 24: 3^{rd} Cross-sectional shape
- 25: Annular spaces
- 26: Annular spaces
- 27: Annular spaces

## Claims

1. Device for forming a press-fit connection with a tube (13),
the device including a socket for insertion of an end section of the tube (13),
the socket being defined by a wall (2;8;14),
wherein the wall (2;8;14) includes at least one first section (S₁;S'₁,;S"₁) extending in axial direction,
the first section (S₁;S'₁;S"₁) including at least one annular bead (5;11;17) and two second sections (S₂ₐ,S_{2b};S'₂ₐ,S'_{2b};S"₂ₐ,S"_{2b}),
the bead (5;11;177) providing a housing at least partially accommodating an annular sealing element (18) with a cross-section diameter with a maximum value D within the socket,
wherein each second section (S₂ₐ, S_{2b};S'₂ₐ,S'_{2b};S"₂ₐ,S"_{2b}) is located immediately adjacent the bead (5; 11; 17) and commences at a position along an axis of the socket at which a magnitude of a derivative of an outside radius of curvature of the wall (2;8;14) with respect to axial position has a local minimum,
wherein each second section (S₂ₐ,S_{2b};S'₂ₐ,S'_{2b};S"₂ₐ,S"_{2b}) has, for every azimuthal position (φ), an inside radius with a minimum at an axial position where the first and second section terminate, wherein
the minimum radius of each second section (S₂ₐ,S_{2b};S'₂ₐ,S'_{2b};S"₂ₐ,S"_{2b}) is smaller than the inside radius at the axial position where the second section (S₂ₐ,S_{2b;}S'₂ₐ,S'_{2b};S"₂ₐ,S"_{2b}) commences, and
a depth of the bead (5;11;17), corresponding to a difference between an inside radius of the wall (2;8;14) at an axial position where the second section (S₂ₐ, S_{2b};S'₂ₐ,S'_{2b};S"₂ₐ,S"_{2b}) commences and a maximum inside radius of the wall (2;8;14) at an axial position where the bead (5;11;17) is provided, is at least equal to half the maximum value D
**characterised in that** a difference between the minimum inside radius of the second section (S₂ₐ, S_{2b};S'₂ₐ,S'_{2b};S"₂ₐ,S"_{2b}) and the maximum inside radius of the wall (2;8;14) is larger than the maximum value D.

2. Device according to claim 1, wherein the minimum radius of each second section (S₂ₐ, S_{2b};S'₂ₐ,S'_{2b};S"₂ₐ,S"_{2b}) corresponds to a minimum radius of the socket, at least on the side of the adjacent bead (5;11;17) on which the second section (S₂ₐ, S_{2b;}S'₂ₐ,S'_{2b};S"₂ₐ,S"_{2b}) is provided.

3. Device according to claim 1 or 2, wherein, in at least one of the second sections (S₂ₐ, S_{2b;}S'₂ₐ,S'_{2b};S"₂ₐ,S"_{2b}), the inside radius increases continually with axial position towards the adjacent bead (5;11;17).

4. Device according to any one of the preceding claims, wherein, seen in longitudinal cross-section through a longitudinal axis of the socket, a tangent to an inside of the wall (2;8;14) is at an angle of 20 ° or less at every axial position within each second section (S₂ₐ,S_{2b};S'₂ₐ,S'_{2b};S"₂ₐ,S"_{2b}).

5. Method of enabling an increased compression of an annular sealing (18) element in a press-fit connection,
which annular sealing element (18) is configured to be at least partially accommodated in a housing provided on an inside of a bead (5;11;17) formed in a wall (2;8;14) of a socket for receiving an end section of a tube (13), including providing the wall (2;8;14) with sections (S₂ₐ,S_{2b};S'₂ₐ,S'_{2b};S"₂ₐ,S"_{2b}) on either side of the bead (5;11;17) that have an inside radius increasing towards the bead (5;11;17) in axial direction for every azimuthal position, wherein a device according to any one of claims 1-4 is provided.

6. Method according to claim 5, wherein the sealing element is compressed using a tool including at least two co-operating jaws configured to envelop at least part of the first section (S₁;S'₁;S"₁), when placed around the device, such that compression of the annular sealing element (18) is due to a larger extent to downward movement of the bead (5;11;17) than to deformation of the bead (5;11;17), and/or wherein an inside radius of the wall (2,8; 14) at each axial position corresponding to a transition between a bead (5;11;17) and an adjacent second section (S₂ₐ, S_{2b};S'₂ₐ,S'_{2b};S"₂ₐ,S"_{2b}) is set such that a difference between this radius and a minimum inside radius of at least the first section of the socket is at most equal to a difference between a maximum outside radius of the bead (5;11;17) when the jaws first contact the bead (5;11;17) and a maximum outside radius of the bead (5;11;17) when the jaws are finally closed upon pressing.

7. Method according to claim 5 or 6, including
providing the annular sealing element and the tube (13), wherein the annular sealing element has an inside diameter larger than the outside diameter of the end section of the tube (13).

8. Method according to any one of claims 5 to 7, including
providing the annular sealing element and the tube (13), wherein the annular sealing element is dimensioned such that, with the end section of the tube (13) inserted through the annular sealing element and into the socket, a clearance for forming a leakage path is provided between the annular sealing element and the housing provided on the inside of a bead (5; 11; 17).

9. Kit of parts for forming a press-fit connection with a tube (13), including:
a press-fit tool; and
a device (1;7;12) according to any one of claims 1-4.

10. Kit of parts according to claim 9, wherein the tool includes at least two co-operating jaws configured to envelop at least part of the first section (S₁; S'₁; S"₁) when placed around the device, and wherein an inside radius of the wall (2;8;14) at each axial position corresponding to a transition between a bead (5; 11; 17) and an adjacent second section (S₂ₐ,S_{2b};S'₂ₐ,S'_{2b};S"₂ₐ, S"_{2b}) is set such that a difference between this radius and a minimum inside radius of at least the first section (S₁;S'₁;S"₁) of the socket is at most equal to a difference between a maximum outside radius of the bead (5; 11 ; 17) when the jaws first contact the bead and a maximum outside radius of the bead (5;11;17) when the jaws are finally closed upon pressing.

11. Kit of parts according to claim 9, wherein the tool includes at least two co-operating jaws configured to envelop at least part of both second sections (S₂ₐ, S_{2b};S'₂ₐ,S'_{2b},S"₂ₐ,S"_{2b}) when placed around the device.

12. Kit of parts according to claim 11, wherein the jaws define an opening with an inside diameter when closed, wherein a wall (2;8;14) thickness of the second sections (S₂ₐ, S_{2b};S'₂ₐ,S'_{2b};S"₂ₐ,S"_{2b}) is such that an inside of the second sections (S₂ₐ, S_{2b};S'₂ₐ,S'_{2b};S"₂ₐ,S"_{2b})is generally cylindrical in shape when the second sections (S₂ₐ, S_{2b};S'₂ₐ,S'_{2b};S"₂ₐ,S"_{2b}) are pressed to such an extent that their outside radii at at least the respective points of commencement correspond to an inside diameter defined by the jaws.

13. Kit of parts according to claim 11, wherein the jaws are configured to envelop both second sections (S₂ₐ, S_{2b};S'₂ₐ,S'_{2b};S"₂ₐ,S"_{2b}) and at least parts of respective adjacent sections (S₃,S₄;S'₃,S'₄;S"₃,S"₄) of the wall (2;8;14), wherein the jaws are provided with an inside profile imparting a non-circular cross-sectional shape to the adjacent sections (S₃,S₄;S'₃,S'₄;S"₃,S"₄) of the wall (2; 8;14), when the jaws are closed.

14. Kit of parts according to claim 9 or 10, wherein the tool includes at least two co-operating jaws configured to exert a pressing force on the bead (5;11;17), in particular contacting only the bead (5;11;17) on first application to the wall (2;8;14), at least upon application to the wall (2;8;14).

## Patentansprüche

1. Vorrichtung zum Bilden einer Pressverbindung mit einem Rohr (13),
wobei die Vorrichtung einen Rohrstutzen zum Einführen eines Endabschnitts des Rohrs (13) umfasst,
wobei der Rohrstutzen durch eine Wand (2; 8; 14) gebildet wird,
wobei die Wand (2; 8; 14) mindestens einen ersten Abschnitt (S₁; S'₁; S"₁) umfasst, der sich in axialer Richtung erstreckt,
der erste Abschnitt (S₁; S'₁; S"₁) mindestens einen ringförmigen Wulst (5; 11; 17) und zwei zweite Abschnitte (S₂ₐ, S_{2b}, S'₂ₐ, S'_{2b}, S"₂ₐ, S"_{2b}) aufweist,
wobei der Wulst (5; 11; 17) ein Gehäuse bildet, das zumindest teilweise ein ringförmiges Dichtungselement (18) mit einem Querschnittsdurchmesser mit einem Maximalwert D innerhalb des Rohrstutzens aufnimmt,
wobei jeder zweite Abschnitt (S₂ₐ, S_{2b}, S'₂ₐ, S'_{2b}, S"₂ₐ, S"_{2b}) unmittelbar angrenzend an den Wulst (5; 11; 17) angeordnet ist und an einer Position entlang einer Achse des Rohrstutzens beginnt, an der eine Größe einer Ableitung eines äußeren Krümmungsradius der Wand (2; 8; 14) in Bezug auf die axiale Position ein lokales Minimum aufweist,
wobei jeder zweite Abschnitt (S₂ₐ, S_{2b}, S'₂ₐ, S'_{2b}, S"₂ₐ, S"_{2b}) für jede Azimutposition (ϕ) einen Innenradius mit einem Minimum an einer axialen Position, an welcher der erste und zweite Abschnitt enden, aufweist, wobei
der minimale Radius jedes zweiten Abschnitts (S₂ₐ, S_{2b}, S'₂ₐ, S'_{2b}, S"₂ₐ, S"_{2b}) kleiner ist als der Innenradius an der axialen Position, an welcher der zweite Abschnitt (S₂ₐ, S_{2b}, S'₂ₐ, S'_{2b}, S"₂ₐ, S"_{2b}) beginnt, und
eine Tiefe des Wulstes (5; 11; 17), die einer Differenz zwischen einem Innenradius der Wand (2; 8; 14) an einer axialen Position, an welcher der zweite Abschnitt (S₂ₐ, S_{2b}, S'_{2a,}, S"_{2b}, S"₂ₐ, S"_{2b}) beginnt, und einem maximalen Innenradius der Wand (2; 8; 14) an einer axialen Position, an welcher der Wulst (5; 11; 17) vorgesehen ist, entspricht, zumindest der Hälfte des Maximalwertes D entspricht,
**dadurch gekennzeichnet, dass** eine Differenz zwischen dem minimalen Innenradius des zweiten Abschnitts (S₂ₐ, S_{2b}, S'₂ₐ, S'_{2b}, S"₂ₐ, S"_{2b}) und dem maximalen Innenradius der Wand (2; 8; 14) größer ist als der Maximalwert D.

2. Vorrichtung nach Anspruch 1, wobei der minimale Radius jedes zweiten Abschnitts (S₂ₐ, S_{2b}, S'_{2a,} S'_{2b}, S"₂ₐ, S"_{2b}) einem minimalen Radius des Rohrstutzens entspricht, zumindest auf der Seite des angrenzenden Wulstes (5; 11; 17), auf welcher der zweite Abschnitt (S₂ₐ, S_{2b}, S'₂ₐ, S'_{2b}, S"₂ₐ, S"_{2b}) vorgesehen ist.

3. Vorrichtung nach Anspruch 1 oder 2, wobei in mindestens einem der zweiten Abschnitte (S₂ₐ, S_{2b}, S'_{2a,} S'_{2b}, S"_{2a,} S"_{2b}) der Innenradius kontinuierlich mit der axialen Position hin zu dem angrenzenden Wulst (5; 11; 17) zunimmt.

4. Vorrichtung nach einem der vorangehenden Ansprüche, wobei sich, im Längsquerschnitt durch eine Längsachse des Rohrstutzens gesehen, eine Tangente zu einer Innenseite der Wand (2; 8; 14) in einem Winkel von 20° oder weniger an jeder axialen Position innerhalb jedes zweiten Abschnitts (S₂ₐ, S_{2b}, S'₂ₐ, S'_{2b}, S"₂ₐ, S"_{2b}) befindet.

5. Verfahren zur Ermöglichung einer verstärkten Kompression eines ringförmigen Dichtungselements (18) in einer Pressverbindung,
wobei das ringförmige Dichtungselement (18) so ausgestaltet ist, dass es zumindest teilweise in einem Gehäuse untergebracht ist, das auf einer Innenseite eines Wulstes (5; 11; 17) vorgesehen ist, der in einer Wand (2; 8; 14) eines Rohrstutzens zur Aufnahme eines Endabschnitts eines Rohrs (13) ausgebildet ist, einschließend Ausstattung der Wand (2; 8; 14) mit Abschnitten (S₂ₐ, S_{2b}, S'₂ₐ, S'_{2b}, S"₂ₐ, S"_{2b}) auf jeder Seite des Wulstes (5; 11; 17), die einen Innenradius aufweisen, der hin zu dem Wulst (5; 11; 17) in axialer Richtung für jede Azimutposition zunimmt, wobei eine Vorrichtung nach einem der Ansprüche 1-4 vorgesehen ist.

6. Verfahren nach Anspruch 5, wobei das Dichtungselement unter Verwendung eines Werkzeugs komprimiert wird, das mindestens zwei zusammenwirkende Backen einschließt, die so ausgestaltet sind, dass sie zumindest einen Teil des ersten Abschnitts (S₁; S'₁, S"₁) umschließen, wenn sie um die Vorrichtung herum platziert werden, so dass die Kompression des ringförmigen Dichtungselements (18) in größerem Maße auf der Abwärtsbewegung des Wulstes (5; 11; 17) als auf der Verformung des Wulstes (5; 11; 17) beruht, und/oder wobei ein Innenradius der Wand (2; 8; 14) an jeder axialen Position, die einem Übergang zwischen einem Wulst (5; 11; 17) und einem angrenzenden zweiten Abschnitt (S₂ₐ, S_{2b}, S'₂ₐ, S'_{2b}, S"₂ₐ, S"_{2b}) entspricht, so eingestellt ist, dass eine Differenz zwischen diesem Radius und einem minimalen Innenradius zumindest des ersten Abschnitts des Rohrstutzens höchstens einer Differenz zwischen einem maximalen Außenradius des Wulstes (5; 11; 17), wenn die Backen in ersten Kontakt mit dem Wulst (5; 11; 17) kommen, und einem maximalen Außenradius des Wulstes (5; 11; 17), wenn die Backen schließlich beim Pressen geschlossen werden, entspricht.

7. Verfahren nach Anspruch 5 oder 6, einschließend:
Bereitstellung des ringförmigen Dichtungselements und des Rohrs (13), wobei das ringförmige Dichtungselement einen Innendurchmesser aufweist, der größer ist als der Außendurchmesser des Endabschnitts des Rohrs (13).

8. Verfahren nach einem der Ansprüche 5 bis 7, einschließend:
Bereitstellung des ringförmigen Dichtungselements und des Rohrs (13), wobei das ringförmige Element so dimensioniert ist, dass, wenn der Endabschnitt des Rohrs (13) durch das ringförmige Dichtungselement und in den Rohrstutzen hinein geführt ist, ein Zwischenraum zum Bilden eines Leckagepfads zwischen dem ringförmigen Dichtungselement und dem auf der Innenseite eines Wulstes (5; 11; 17) vorgesehenen Gehäuse geschaffen wird.

9. Teilesatz zum Bilden einer Pressverbindung mit einem Rohr (13), einschließend:
ein Pressverbindungswerkzeug; und
eine Vorrichtung (1; 7; 12) nach einem der Ansprüche 1-4.

10. Teilesatz nach Anspruch 9, wobei das Werkzeug mindestens zwei zusammenwirkende Backen einschließt, die so ausgestaltet sind, dass sie zumindest einen Teil des ersten Abschnitts (S₁; S'₁; S"₁) umschließen, wenn sie um die Vorrichtung herum platziert werden, und wobei ein Innenradius der Wand (2; 8; 14) an jeder axialen Position, die einem Übergang zwischen einem Wulst (5; 11; 17) und einem angrenzenden zweiten Abschnitt (S₂ₐ, S_{2b}, S'₂ₐ, S'_{2b}, S"₂ₐ, S"_{2b}) entspricht, so eingestellt ist, dass eine Differenz zwischen diesem Radius und einem minimalen Innenradius zumindest des ersten Abschnitts (S₁; S'₁, S"₁) des Rohrstutzens höchstens einer Differenz zwischen einem maximalen Außenradius des Wulstes (5; 11; 17), wenn die Backen in ersten Kontakt mit dem Wulst kommen, und einem maximalen Außenradius des Wulstes (5; 11; 17), wenn die Backen schließlich beim Pressen geschlossen werden, entspricht.

11. Teilesatz nach Anspruch 9, wobei das Werkzeug mindestens zwei zusammenwirkende Backen einschließt, die so ausgestaltet sind, dass sie zumindest einen Teil von beiden zweiten Abschnitten (S₂ₐ, S_{2b}, S'₂ₐ, S'_{2b}, S"₂ₐ, S"_{2b}) umschließen, wenn sie um die Vorrichtung herum platziert werden.

12. Teilesatz nach Anspruch 11, wobei die Backen eine Öffnung mit einem Innendurchmesser begrenzen, wenn sie geschlossen sind, wobei die Dicke einer Wand (2; 8; 14) der zweiten Abschnitte (S₂ₐ, S_{2b}, S'₂ₐ, S'_{2b}, S"₂ₐ, S"_{2b}) so ist, dass eine Innenseite der zweiten Abschnitte (S₂ₐ, S_{2b}, S'₂ₐ, S'_{2b}, S"₂ₐ, S"_{2b}) eine im Allgemeinen zylindrische Form aufweist, wenn die zweiten Abschnitte (S₂ₐ, S_{2b}, S'₂ₐ, S'_{2b}, S"₂ₐ, S"_{2b}) in einem solchen Maße gepresst werden, dass ihre Außenradien an zumindest den entsprechenden Punkten des Beginns einem durch die Backen begrenzten Innendurchmesser entsprechen.

13. Teilesatz nach Anspruch 11, wobei die Backen so ausgestaltet sind, dass sie beide zweite Abschnitte (S₂ₐ, S_{2b}, S'₂ₐ, S'_{2b}, S"₂ₐ, S"_{2b}) und zumindest Teile entsprechender angrenzender Abschnitte (S₃, S₄, S'₃, S'₄, S"₃, S"₄) der Wand (2; 8; 14) umschließen, wobei die Backen mit einem Innenprofil versehen sind, das den angrenzenden Abschnitten (S₃, S₄, S'₃, S'₄, S"₃, S"₄) der Wand (2; 8; 14) eine nicht kreisförmige Querschnittsform verleiht, wenn die Backen geschlossen sind.

14. Teilesatz nach Anspruch 9 oder 10, wobei das Werkzeug mindestens zwei zusammenwirkende Backen einschließt, die so ausgestaltet sind, dass sie, zumindest bei Anwendung auf die Wand (2; 8; 14), eine Presskraft auf den Wulst (5; 11; 17) ausüben, wobei insbesondere bei erster Anwendung auf die Wand (2; 8; 14) nur der Wulst (5; 11; 17) kontaktiert wird.

## Revendications

1. Dispositif pour former un accord à agencement par pression avec un tube (13),
le dispositif comprenant une douille destinée à une insertion d'un tronçon d'extrémité du tube (13),
la douille étant formée par une paroi (2 ; 8 ; 14),
la paroi (2 ; 8 ; 14) comprenant au moins un premier tronçon (S₁ ; S'₁ ; S"₁) s'étendant dans la direction axiale,
le premier tronçon (S₁ ; S'₁ ; S"₁) comprenant au moins un bourrelet annulaire (5 ; 11 ; 17) et deux seconds tronçons (S₂ₐ, S_{2b} ; S'₂ₐ, S'_{2b} , S"₂ₐ, S"_{2b}),
le bourrelet (5 ; 11 ; 17) fournissant un logement recevant au moins partiellement un élément d'étanchéité annulaire (18) ayant un diamètre en coupe transversale d'une valeur maximum D dans la douille,
dans lequel chaque second tronçon (S₂ₐ, S_{2b} : S'_{2a,} S'_{2b} , S"₂ₐ, S"_{2b}) est positionné immédiatement adjacent au bourrelet (5 ; 11 ; 17), et commence dans une position le long d'un axe de la douille au niveau de laquelle une amplitude d'une dérivée d'un rayon de courbure extérieur de la paroi (2 ; 8 ; 14) par rapport à une position axiale a un minimum local,
dans lequel chaque second tronçon (S₂ₐ, S_{2b} ; S'₂ₐ, S'_{2b} ; S"_{2a,} S"_{2b}) a, pour chaque position azimutale (ϕ), un rayon intérieur ayant un minimum dans une position axiale où se terminent les premier et seconds tronçons, dans lequel le rayon minimum de chaque second tronçon (S₂ₐ, S_{2b} ; S'₂ₐ, S'_{2b} , S"₂ₐ, S"_{2b}) est inférieur au rayon intérieur dans la position axiale où commence le second tronçon (S₂ₐ, S_{2b} ; S'_{2a,} S'_{2b} , S"₂ₐ, S"_{2b}), et
une profondeur du bourrelet (5 ; 11 ; 17), correspondant à une différence entre un rayon intérieur de la paroi (2 ; 8 ; 14) dans une position axiale où le second tronçon (S₂ₐ, S_{2b} ; S'₂ₐ, S'_{2b} , S"₂ₐ, S"_{2b}) commence, et un rayon intérieur maximum de la paroi (2 ; 8 ; 14) dans une position où le bourrelet (5 ; 11 ; 17) est agencé, est au moins égale à la moitié de la valeur maximum D,
**caractérisé en ce que**
une différence entre le rayon intérieur minimum du second tronçon (S₂ₐ, S_{2b} , S'_{2a,} S'_{2b} , S"₂ₐ, S"_{2b}) et le rayon intérieur maximum de la paroi (2 ; 8 ; 14) est supérieure à la valeur maximum D.

2. Dispositif selon la revendication 1, **caractérisé en ce que** le rayon minimum de chaque second tronçon (S₂ₐ, S_{2b} ; S'₂ₐ, S'_{2b} , S"₂ₐ, S"_{2b}) correspond à un rayon minimum de la douille, au moins sur le côté du bourrelet adjacent (5 ; 11 ; 17) sur lequel le second tronçon (S₂ₐ, S_{2b} ; S'₂ₐ, S'_{2b} , S"₂ₐ, S"_{2b}) est agencé.

3. Dispositif selon la revendication 1 ou 2, **caractérisé en ce que** dans au moins un des seconds tronçons (S₂ₐ, S_{2b} ; S'_{2a,} S'_{2b} , S"₂ₐ, S"_{2b}), le rayon intérieur augmente en continue avec une position axiale vers le bourrelet adjacent (5 ; 11 ; 17).

4. Dispositif selon l'une quelconque revendication précédente, **caractérisé en ce qu'**en regardant une coupe transversale longitudinale à travers un axe longitudinal de la douille, une tangente à un intérieur de la paroi (2 ; 8 ; 14) est sur un angle de 20° ou moins dans chaque position axiale dans chaque second tronçon (S₂ₐ, S_{2b} ; S'₂ₐ, S'_{2b} , S"2ₐ, S"2_{b})

5. Procédé pour autoriser une compression accrue d'un élément d'étanchéité annulaire (18) dans un raccord à agencement par pression, lequel élément d'étanchéité annulaire (18) est configuré pour être reçu au moins partiellement dans un logement agencé sur un intérieur d'un bourrelet (5 ; 11 ; 17) formé dans une paroi (2 ; 8 ; 14) d'une douille destinée à recevoir un tronçon d'extrémité d'un tube (13), comprenant l'étape consistant à doter la paroi (2 ; 8 ; 14) de tronçons (S₂ₐ, S_{2b} ; S'₂ₐ, S'_{2b} , S"₂ₐ, S"_{2b}) de chaque côté du bourrelet (5 ; 11 ; 17) ayant un rayon intérieur augmentant vers le bourrelet (5 ; 11 ; 17) dans une direction axiale pour chaque position azimutale, **caractérisé en ce qu'**un dispositif selon l'une quelconque des revendications 1 à 4 est fourni.

6. Procédé selon la revendication 5, **caractérisé en ce que** l'élément d'étanchéité est comprimé en utilisant un outil comprenant au moins deux mâchoires coopérantes configurées pour envelopper au moins une partie du premier tronçon (S₁ ; S'₁ ; S"₁) lorsque mises en place autour du dispositif, de telle sorte qu'une compression de l'élément d'étanchéité annulaire (18) est due dans une plus grande mesure à un déplacement vers le bas du bourrelet (5 ; 11 ; 17) qu'à une déformation du bourrelet (5 ; 11 ; 17), et/ou **en ce que** un rayon intérieur de la paroi (2 ; 8 ; 14), dans chaque position axiale correspondant à une transition entre le bourrelet (5 ; 11 ; 17) et un second tronçon adjacent (S₂ₐ, S_{2b} , S'_{2a,} S'_{2b} , S"_{2a,} S"_{2b}), est établi de telle sorte qu'une différence entre ce rayon et un rayon intérieur minimum d'au moins le premier tronçon de la douille est au plus égale à une différence entre un rayon extérieur minimum du bourrelet (5 ; 11 ; 17), lorsque les mâchoires viennent premièrement en contact avec le bourrelet (5 ; 11 ; 17), et un rayon extérieur maximum du bourrelet (5 ; 11 ; 17) lorsque les mâchoires sont finalement fermées après compression.

7. Procédé selon la revendication 5 ou 6, comprenant l'étape consistant à fournir l'élément d'étanchéité annulaire et le tube (13), **caractérisé en ce que** l'élément d'étanchéité annulaire a un diamètre intérieur plus grand que le diamètre extérieur du tronçon d'extrémité du tube (13).

8. Procédé selon l'une quelconque des revendications 5 à 7, comprenant l'étape consistant à fournir l'élément d'étanchéité et le tube (13), **caractérisé en ce que** l'élément d'étanchéité annulaire est dimensionné de telle sorte qu'avec le tronçon d'extrémité du tube (13) inséré à travers l'élément d'étanchéité annulaire et jusque dans la douille, un jeu pour former un trajet de fuite est fourni entre l'élément d'étanchéité annulaire et le logement fourni sur l'intérieur d'un bourrelet (5 ; 11 ; 17).

9. Kit de pièces pour former un raccord à agencement par pression avec un tube (13), comprenant :
un outil d'agencement par pression ; et
un dispositif (1 ; 7 ; 12) selon l'une quelconque des revendications 1 à 4.

10. Kit de pièces selon la revendication 9, **caractérisé en ce que** l'outil comprend au moins deux mâchoires coopérantes configurées pour envelopper au moins une partie du premier tronçon (S₁ ; S'₁ ; S"₁) lorsque mises en place autour du dispositif, et **en ce qu'**un rayon intérieur de la paroi (2 ; 8 ; 14) dans chaque position axiale correspondant à une transition entre un bourrelet (5 ; 11 ; 17) et un second tronçon adjacent (S₂ₐ, S_{2b} ; S'₂ₐ, S'_{2b} , S"₂ₐ, S"_{2b}) est établi de telle sorte qu'une différence entre ce rayon et un rayon intérieur minimum d'au moins le premier tronçon (S₁ ; S'₁ ; S"₁) de la douille est au plus égale à une différence entre un rayon extérieur maximum du bourrelet (5 ; 11 ; 17) lorsque les mâchoires viennent premièrement en contact avec le bourrelet, et un rayon extérieur maximum du bourrelet (5 ; 11 ; 17) lorsque les mâchoires sont finalement fermées par compression.

11. Kit de pièces selon la revendication 9, **caractérisé en ce que** l'outil comprend au moins deux mâchoires coopérantes configurées pour envelopper au moins une partie de deux seconds tronçons (S₂ₐ, S_{2b} ; S'_{2a,} S'_{2b} ; S"₂ₐ, S"_{2b}) lorsque mises en place autour du dispositif.

12. Kit de pièces selon la revendication 11, **caractérisé en ce que** les mâchoires définissent une ouverture avec un diamètre intérieur une fois fermées, une épaisseur de la paroi (2 ; 8 ; 14) des seconds tronçons (S₂ₐ, S_{2b} ; S'_{2a,} S'_{2b} ; S"₂ₐ, S"_{2b}) est telle qu'un intérieur des seconds tronçons (S₂ₐ, S_{2b} ; S'₂ₐ, S'_{2b} ; S"₂ₐ, S"_{2b}) est généralement d'une forme cylindrique lorsque les seconds tronçons (S₂ₐ, S_{2b}; S'₂ₐ, S'_{2b}; S"₂ₐ, S"_{2b}) sont comprimés dans une mesure telle que leurs rayons extérieurs, au moins au niveau des points de départ respectifs, correspondent à un diamètre intérieur défini par les mâchoires.

13. Kit de pièces selon la revendication 11, **caractérisé en ce que** les mâchoires sont configurées pour envelopper les deux seconds tronçons (S₂ₐ, S_{2b} ; S'₂ₐ, S'_{2b} ; S"_{2a,} S"_{2b}) et au moins de parties de tronçons adjacents respectifs (S₃, S₄ ;S'₃,S'₄ ;S"₃,S''₄) de la paroi (2 ; 8 ; 14), et **en ce que** les mâchoires sont dotées d'un profil intérieur imprimant une forme de coupe transversale non circulaire aux tronçons adj acents (S₃, S₄ ;S'₃,S'₄ S"₃, S',₄) de la paroi (2 ; 8 ; 14), lorsque les mâchoires sont fermées.

14. Kit de pièces selon la revendication 9 ou 10, **caractérisé en ce que** l'outil comporte au moins deux mâchoires coopérantes configurées pour exercer une force de compression sur le bourrelet (5 ; 11 ; 17), en particulier en venant en contact avec uniquement le bourrelet (5 ; 11 ; 17) lors d'une première application sur la paroi (2 ; 8 ; 14), au moins lors d'une application sur la paroi (2 ; 8 ; 14).
